# EUROPÄISCHE PATENTANMELDUNG

(11) **EP 0 552 391 A1**
(43) Veröffentlichungstag der Anmeldung: **28.07.1993**
(21) Anmeldenummer: 92100890.0
(22) Anmeldetag: 21.01.1992
(51) Int. Cl.: B29C 67/18, B29C 45/14, B60R 13/02, F16B 11/00

(54) **Verkleidungsteil**

(71) Anmelder: H.P. Chemie Pelzer Research & Development Ltd., Waterford (IE)
(72) Erfinder: Casey, John, Tramore, County Waterford (IE)
(74) Vertreter: Recktenwald, Albert, Dipl.-Ing.

(57) **Zusammenfassung**

Bei einem Verfahren zur Herstellung eines an die Form der zu verkleidenden Oberfläche zur Verbindung mit dieser angepaßten Verkleidungsteils für die Innenverkleidung von Fahrzeugen werden in getrennten Verfahrensgängen ein Dekorteil (1) als erste Halbschale und eine Absorberschale (2) als zweite Halbschale hergestellt und in eine zweiteilige Form derart eingelegt, daß im Formendeckel der Dekorteil und im Formenboden die Absorberschale liegt. Beide Schalen sind auf Nadeln befestigt. Die Form ist so bemessen, daß bei geschlossener Form zwischen beiden Schalen ein vorzugsweise im wesentlichen durchgehender Spalt (20) bleibt. Deckel und Boden der Form werden aufgeheizt. Nach dem oder mit dem Schließen der Form wird die Zwischenschicht (3) hergestellt.

## Beschreibung

Die Erfindung betrifft ein Verkleidungsteil nach dem Oberbegriff des Anspruchs 1.
Ein als Verkleidungsteil dienendes Formteil ist aus der DE 32 33 675 A1 bekannt.

Das in der DE 32 33 675 A1 beschriebene bekannte Formteil soll ausgehend von einem Stand der Technik, bei dem ein als Verkleidungsteil dienendes Formteil beispielsweise dadurch hergestellt wird, daß ein formstabiles Basisteil unter Druck- und/oder Temperatureinwirkung mit einer Folie kaschiert wird, die mit einer Kunststoff- oder Schaumstoffschicht hinterlegt ist und bereits das gewünschte Oberflächenmuster aufweist, die Nachteile dieses Standes der Technik beseitigen. Das soll dadurch geschehen, daß das gewünschte Prägemuster bereits in die Oberfläche des durch die Folie abzudeckenden, insbesondere aus einem Holzfaserwerkstoff bestehenden Basisteils eingearbeitet wird und sich beim Kaschiervorgang auf die Kaschierfolie überträgt. Um dies zu ermöglichen, soll die Kaschierfolie von geringer, nicht über 0,5 mm liegender Dicke sein. Zur Schaffung eines angenehmen Griffs sowie zur Erzeugung von Polstereigenschaften ist in der DE 32 33 675 A1 vorgeschlagen, an hierfür vorgesehenen Stellen vorgeformte Schaumstoffteile zwischen das Basisteil und die Folie einzulegen. Verschiedenfarbene und/oder verschieden gemusterte Folienoberflächen werden aus entsprechend gestalteten Teilstücken zusammengesetzt. Die sich überlappenden Ränder der Folien bzw. der Teilstücke werden nach Abschluß des Kaschiervorgangs gesäubert, die Außenkanten der Folie in einem besonderen Arbeitsgang umgelegt (Umbug).

Das bekannte Verkleidungsteil zeigt den erheblichen Nachteil, daß es zu den immer nachhaltiger gestellten Forderungen nach Verminderung des von den Fahrzeuginsassen zu ertragenden Geräuschpegels nichts beitragen kann. Das aus verpreßten Holzfaserwerkstoffen bestehende Basisteil bildet eine harte Schale, die statt schallabsorbierend eher schallverstärkend wirkt. Hieran kann sich auch durch die ggf. stellenweise zwischen Kaschierfolie und Basisteil eingelegten Polsterteile aus Schaumstoff nichts ändern. Zudem ist bei einer unterschiedlichen Bemusterung der Folienoberfläche und der dadurch bedingten Stückelung ein sauberer Stoß zwischen den Folien-Teilstücken nicht zu gewährleisten.

Insgesamt ist bei dem bekannten Formteil der nicht oder nur unter hohen Kosten mechanisierbare Anteil an Handarbeit sehr hoch, so daß die kostspielige und aufwendige Herstellung auch das Produkt selbst erheblich verteuert. Eine Wiederverwertung (Recycling) dieser Verkleidungsteile ist nicht oder allenfalls in sehr beschränktem Umfang möglich.

Der Erfindung liegt danach die Aufgabe zugrunde, ein Verfahren aufzuzeigen, durch das die weitgehend mechanisierte Herstellung eines für die Innenverkleidung der Fahrgastkabine von Kraftfahrzeugen, insbesondere Personenkraftwagen, verwendbaren besonders für die Innenverkleidung von Türen geeigneten Verkleidungsteils ermöglicht wird, das hervorragende Dämm-, Absorptions- und Isoliereigenschaften aufweist und eine Materialauswahl zuläßt, die es zur praktisch abfallfreien Wiederverwertung geeignet macht. Diese Aufgabe wird durch den Anspruch 1 gelöst.

Dadurch daß zunächst das Dekorteil und das Absorberteil in getrennten Verfahrensgängen erzeugt werden, ergeben sich mit geringstmöglichem Aufwand die verschiedenartigsten Gestaltungsmöglichkeiten.

So kann das im fertigen Verkleidungsteil durch das Dekorteil abgedeckte Absorberteil ohne Änderungen mit unterschiedlich aufgebauten und ausgestatteten Dekorteilen kombiniert werden. Es ist daher möglich, dem Absorberteil einen ausschließlich nach Gesichtspunkten der akustischen Leistungsfähigkeit und Wirksamkeit ausgerichteten und an die jeweils konkreten Anforderungen bestmöglich angepaßten Aufbau zu geben. Auch die beide Teile verbindende Zwischenschicht kann ohne die Notwendigkeit einer geänderten Ausführung der übrigen Teile des Verkleidungsteils unterschiedlichen an sie gestellten Anforderungen angepaßt werden.

Dabei ergeben sich auch für die Zwischenschicht mehrere Möglichkeiten. die auf Gestaltung und Aufbau von Dekorteil und Absorberteil keinen Einfluß haben müssen. So kann nach dem Schließen der Form in den zwischen den zwei Schalen vorgesehenen Spalt zur Bildung der Zwischenschicht ein beispielsweise akustisch wirksamer thermoplastischer Kunststoff eingespritzt werden. Dies erfolgt bevorzugt unter Verfahrensbedingungen, bei denen sich der Kunststoff beim Spritzvorgang mit den dem Spalt zugekehrten Oberflächen des Dekorteils und des Absorberteils innig verbindet und so dem erfindungsgemäßen Verkleidungsteil Zusammenhalt und vorzugsweise auch eine ggf. erhöhte Stabilität verleiht.

Bei dieser Ausführung der Erfindung werden in dem Absorberteil bei dessen Herstellung oder vor dem Einlegen in den Formenboden zweckmäßig Durchlaßöffnungen für die Spritzmasse vorgesehen. Sie werden bevorzugt so angeordnet, daß ihre Lage mit der Lage der Spritzdüsen, die vorzugsweise Nadelverschlußdüsen sind, im Formenboden übereinstimmt. Es können aber beispielsweise auch die Mündungen der oder einiger Spritzdüsen als in das Innere der Spritzform hineinragende Haltenadeln ausgebildet sein oder eine genügende Anzahl der Haltenadeln kann gleichzeitig als Einspritzdüsen verwendbar sein. Hierbei kann dann vorteilhaft die Herstellung der Durchlaßöffnungen mit dem Einlegen des Absorberteils in die Form erfolgen. Die Zwischenschicht kann, u.a. beispielsweise zur Beeinflussung der akustischen Eigenschaften des erfindungsgemäßen Verkleidungsteils, auch durch den Abschnitt eines Folienschlauchs aus geeignetem Material gebildet werden. Dazu wird bevorzugt der Folienschlauchabschnitt, der zuvor an den Enden verschlossen wurde und unter vorzugsweise schwachem Luftdruck steht, vor dem Schließen der Form zwischen das Dekorteil und das Absorberteil eingelegt. Dabei legt sich die Oberfläche des Folienschlauchabschnitts durch die Wirkung des sich beim Schließen der Form in seinem Inneren aufbauenden erhöhten Druckes an die durch die Innenseiten des Dekorteils und des Absorberteils gebildeten Kontaktflächen an. An sich bekannte geeignete Maßnahmen wie Anwendung von Wärme oder/ und Imprägnierung der Kontaktflächen führen dabei zu einer innigen Verbindung der Schlauchoberflächen mit den Innenseiten des Dekorteils und des Absorberteils. Beim Schließen der Form werden am Ende des Schließvorgangs die Überstände des Folienschlauches, bevorzugt bündig, mit den Außenrändern des Dekorteils und des Absorberteils abgeschert. Der Ablauf wird dabei vorteilhaft so gesteuert, daß die Verbindung der Folienoberfläche mit den Kontaktoberflächen hergestellt, insbesondere abgeschlossen ist, wenn das Abscheren der Überstände des Folienschlauches erfolgt.

Soll die Zwischenschicht durch das Einlegen einer Schlauchfolie gebildet werden, so wird das Absorberteil vorzugsweise auf seiner Innenseite mit Rippen versehen. Anzahl, Größe und Verteilung der Rippen können unter Berücksichtigung ihrer akustischen Wirkung beispielsweise auf Grund von Festigkeits- sowie Stabilitätsabschätzungen bestimmt werden. Dabei soll die Höhe der einzelnen Rippen bei Berücksichtigung der hinzuzurechnenden Foliendicke der vorgesehenen Spaltdicke entsprechen. Bevorzugt weisen daher die Rippen des Absorberteils eine Höhe auf, die im wesentlichen der um die zweifache, vorzugsweise der um die einfache bis anderthalbfache Foliendicke verringerten Spaltdicke entspricht. Damit soll die beim Schließen der Form im Bereich der Rippen in der Wärme sich verringernde Dicke der Schlauchwände in ausreichendem Maße berücksichtigt werden.

Ausgehend von einer breiten Palette von zur Verfügung stehenden Ausgangsstoffen, insbesondere von Kunststoffen, die zu Fäden und Fasern ebenso wie zu verschiedenartigen Schäumen und Folien, zu biegsamen hart- oder weichelastischen, akustisch wirksamen Platten bzw. Flächengebilden verarbeitbar sind kann das Verkleidungsteil ohne wesentliche Einschränkungen für seine Gestaltung in allen seinen Teilen bzw. Schichten aus verschiedenen Verarbeitungsformen desselben oder chemisch verwandter Ausgangsmateralien aufgebaut sein und daher problemlos dem Recycling zugeführt werden.

Dabei ist auch hilfreich, daß bei der Ausführung des erfindungsgemäßen Verfahrens Schwierigkeiten, welche sich durch unterschiedliche Anforderungen, beispielsweise durch verschiedene Verarbeitungstemperaturen, durch getrennte Herstellung des Dekor- und des Absorberteils sowie der verbindenden Zwischenschicht einstellen könnten, weitgehend vermeidbar oder überwindbar sind.

Dies gilt insbesondere für Fälle, bei denen das Dekorteil verschiedene Abschnitte mit unterschiedlicher Musterung aufweisen soll. Hier treten bei dem bekannten Stand der Technik vor allem an den Stoßstellen der einzelnen Muster dadurch Schwierigkeiten auf, daß die sich gegenseitig überlappenden Folienabschnitte in aufwendiger Arbeit versäubert werden müssen. Die Erfindung löst das Problem dadurch, daß die einzelnen Musterbereiche des Dekorteils getrennt und mit sauberen (Umbug-)Kanten hergestellt werden. Die einzelnen Teile werden dann entweder beim Einlegen in die Form zusammengesetzt und bei der Herstellung der Zwischenschicht zum gewünschten Dekorteil zusammengefügt oder vor dem Einlegen in die Form - beispielsweise durch Kleben oder Schweißen - zu dem Dekorteil zusammengesetzt.

Für die Herstellung des erfindungsgemäßen Verkleidungsteils wird bevorzugt ein an eine geeignete Spritzgießanlage angeschlossenes Werkzeug benutzt, das aus einer fest aufgespannten Formenhälfte (im weiteren Formenboden) und einer beweglich aufgespannten Formenhälfte (im weiteren Formendeckel) besteht. Formenboden und Formendeckel sind auf ihren Innenseiten mit Haltenadeln ausgerüstet. Eine Formenhälfte, vorzugsweise der Formenboden, ist mit einer dem vorgesehenen Ablauf des Spritzvorganges angepaßten Zahl von Nadelverschlußdüsen ausgerüstet.

Bei der Herstellung eines erfindungsgemäßen Verkleidungsteils wird beispielsweise das aus üblichem, den beschriebenen Bedingungen genügendem Oberflächenmaterial bestehende vorgeformte Dekorteil, dessen ggf. vorhandener Umbug an den rückseitigen Rand angelegt ist, in die Haltenadeln des Formendeckels eingelegt und der Formendeckel auf eine Temperatur von ca. 40 °C bis 60 °C gebracht. In die Haltenadeln des auf eine Temperatur von ca. 40 °C bis 80 °C gebrachten Formenboden wird das aus im wesentlichen offenporigem Schaum bestehende vorgeformte Absorberteil eingelegt, nachdem es an den mit den Spritzdüsen korrespondierenden Orten mit in dem für die Zwischenschicht vorgesehenen Spalt zwischen Dekor- und Absorberteil mündenden Durchbrüchen versehen wurde. Nach dem Schließen der Form wird dann beispielsweise im Niederdruckverfahren aus einem geeigneten Thermoplast die bevorzugt ebenfalls akustisch wirksame Zwischenschicht hergestellt.

Das so hergestellte Verkleidungsteil kann bei Verwendung von in unterschiedlichen Modifikationen zur Verfügung stehenden Ausgangsstoffen, die den weiter oben aufgeführten Bedingungen genügen, zur Wiederverwertung ohne Abfall in ein Recycling-Verfahren eingebracht werden.

Anhand der in der beigegebenen Zeichnung dargestellten Ausführungbeispiele wird die Erfindung erläutert. Es zeigt:
- Fig. 1: mit gegenseitigem Abstand Dekorteil, Zwischenschicht und Absorberteil;
- Fig. 2: aus den Teilen der Fig. 1 zusammengesetztes Verkleidungsteil;
- Fig. 3: eine weitere Ausführung des erfindungsgemäßen Verkleidungsteils;
- Fig. 4: zweiteilige Form mit eingelegtem Dekorteil und Absorberteil;
- Fig. 5: Ausführungsbeispiel eines Umbugs.

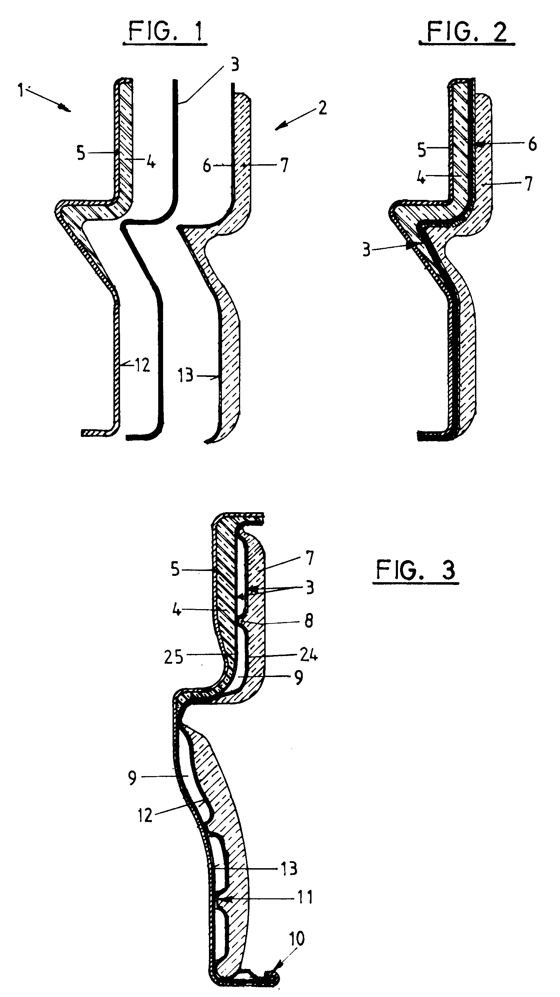

Es wird darauf hingewiesen, daß die Figuren unmaßstäbliche Prinzipdarstellungen sind, die funktionell nach der Erfindung ausgeführten Verkleidungsteilen entsprechen und der Erläuterung der Erfindung dienen. Dabei ist zu der Darstellung der Fig. 1 anzumerken, daß zu Demonstrationszwecken zwar alle drei Schichten eines fertigen erfindungsgemäßen Verkleidungsteils auseinandergezogen dargestellt sind, es ist jedoch zu beachten, daß die Zwischenschicht 3 bei allen Ausführungsformen des erfindungsgemäßen Verfahrens erst nach dem Einlegen von Dekorteil 1 und Absorberteil 2 in der geschlossenen Form hergestellt wird. Gegenstand der Fig. 2 ist das aus den drei Schichten der Fig. 1 zusammengesetzte Verkleidungsteil.

Dekorteil 1 und Absorberteil 2 werden zunächst in getrennten Arbeitsgängen hergestellt. Dies hat den Vorteil, daß beide Teile 1, 2 jeweils bezüglich ihres Aufbaus und der verwendeten Ausgangsmaterialien für die jeweils von ihnen zu erfüllende Aufgabe unabhängig voneinander optimiert werden können. Durch entsprechende Wahl des Ausgangsstoffes für die Zwischenschicht 3 und deren Herstellungsweise können mögliche Anpassungsschwierigkeiten überwunden werden, die bei unterschiedlichen Anforderungen der beiden Teile 1, 2 bezüglich der Bedingungen bei der Verarbeitung zu erwarten wären.

Das Dekorteil 1 der Figuren 1 und 2 besteht aus der eigentlichen Dekorschicht 5, die bei der Herstellung im mittleren bis oberen Bereich mit einer Unterschicht 4 hinterlegt wurde. Die Unterschicht 4 kann, etwa zum Erzielen von Polstereigenschaften, aus einem Weichschaum bestehen, während die Dekorschicht 5 aus einer Webware bestehen kann, die in dem in der Wärme verformten Zustand in sich formstabil ist. In jedem Fall wird bei dem Dekorteil 1 ein Aufbau bevorzugt, der ihm - u.a. zur Erleichterung der Manipulierbarkeit - eine gewisse Formstabilität gibt.

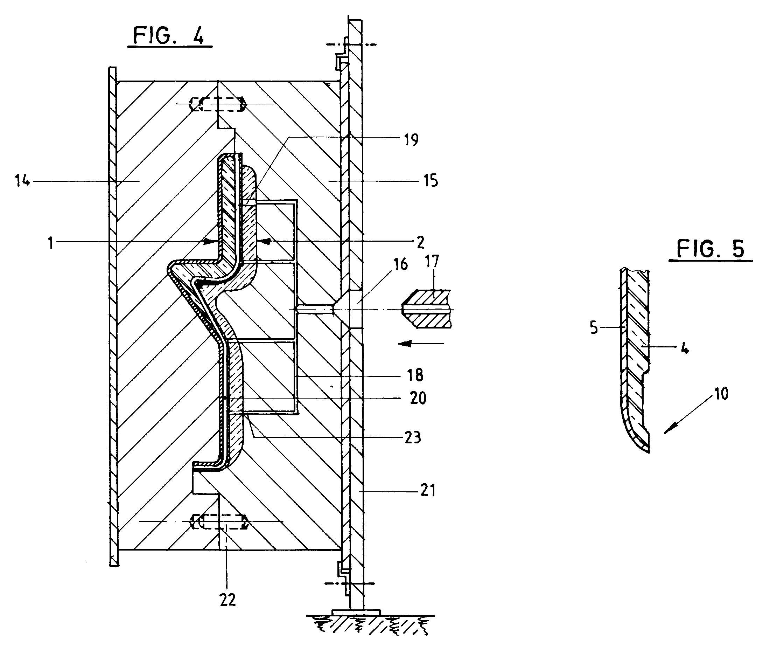

Das Absorberteil 2 der Figuren 1 und 2 besteht aus einer offenporigen, akustisch wirksamen Schaumschicht 7, deren zu dem Spalt 20 (Fig. 4) weisende Grenzschicht 6 verfestigt ist. Die Schaumschicht 7 ist zwar durchgehend dargestellt, dies ist jedoch nicht in jedem Fall notwendig und wesentlich von der Beschaffenheit, der Form und der Anordnung des zu verkleidenden Fahrzeugteils abhängig.

Die Fig. 4 zeigt eine aus dem Formenboden 15 und dem Formendeckel 14 bestehende Spritzform für die Herstellung des in Fig. 2 dargestellten erfindungsgemäßen Verkleidungsteils. beide Formenhälften 14 und 15 sind mit Hilfe der Paßstifte 22 in ihrer Lage zueinander festgelegt. Der Formenboden 15 ist mit einer - wie angedeutet am Boden befestigten - Verankerung 21 verbunden. Der Formenboden 15 (mit der Verankerung 21) weist eine Einfüllöffnung 16 auf, in welche das nur angedeutete Spritzwerkzeug 17 eingefahren werden kann. Von der Einfüllöffnung 16 führt ein sich verzweigender Verteilerkanal 18 zu den Spritzdüsen 23.

Das Dekorteil 1 ist in den Formendeckel 14 eingelegt und in seiner Lage durch nicht dargestellte Nadeln gehalten. Das vorher mit Öffnungen 19 zum Schmelzedurchtritt versehene Absorberteil 2 ist im Formenboden 15 eingelegt. Die Form ist geschlossen. Zwischen Dekorteil 1 und Absorberteil 2 ist ein Spalt 20 geblieben. Zur Fertigstellung des erfindungsgemäßen Verkleidungsteils wird nach dem Schließen der Form das Spritzwerkzeug 17 in die Einfüllöffnung 16 gefahren und der Spalt 19 über die Kanäle 18 und die Spritzdüsen 23 mit der sich beim Ausfüllen des Spalts 20 mit den beiden Berührungsflächen 12, 13 verbindenden Kunststoffschmelze ausgefüllt. Dabei entsteht die Zwischenschicht 3. Insbesondere dann, wenn einzelne Nadeln zugleich als durch das Absorberteil reichende Spritzdüsen 23 ausgebildet sind, aber auch bei der vorhergehend beschriebenen Ausrüstung haben sich die Durchgänge 19 in dem Absorberteil als akustisch unschädlich erwiesen.

Nach dem Abkühlen der Zwischenschicht 3 wird der Formendeckel 14 weggefahren und das Verkleidungsteil entnommen.

Eine abgewandelte Ausführungsform des erfindungsgemäßen Verkleidungsteils ist in der Fig. 3 gezeigt. Von dem vorhergehend beschriebenen unterscheidet sich das Verkleidungsteil der Fig. 3 abgesehen von der für das Wesen der Erfindung unwesentlichen Gestalt durch eine anders aufgebaute Zwischenschicht 3.

Zur Bildung der in Fig. 3 dargestellten Zwischenschicht 3 wird - wie aus den Ansprüchen 4 und 5 hervorgeht - vor dem Schließen der Form 14, 15 zwischen das Dekorteil 1 und das Absorberteil 2 ein unter vorzugsweise schwachem Luftdruck stehender, an den Enden verschlossener Folienschlauchabschnitt 24, 25 eingelegt. Das Absorberteil 2 weist auf seiner Innenseite Rippen 8 auf, deren Höhe der Spaltdicke etwa entspricht. Durch das Zusammendrücken des Folienschlauches 24, 25 erhöht sich der Innendruck so stark, daß sich die Folienschlauchoberfläche - vorzugsweise außer der Wirkung des erhöhten Luftdrucks auch durch Wärmeeinwirkung verursacht - an die Innenseiten 12, 13 des Dekorteils 1 und des Absorberteils 2 anlegt und beim Schließen der Form 14, 15 mit den Innenseiten 12, 13 verbindet. Im Bereich der Rippen 8 werden beim Schließen der Form 14, 15 die beiden Schlauchwände 24, 25 aufeinandergepreßt, wobei sich örtlich auch die Foliendicke verringern kann. Zwischen den Rippen 8 bilden die durch den Innendruck gegen die Innenseiten 12, 13 gedrückten Schlauchfolienwände 24, 25 sich beim Abkühlen verfestigende Hohlräume 9. Die Höhe der Rippen 8 ist dabei so abgestimmt, daß sich zusammen mit den zwischen den Rippen und dem Dekorteil liegenden Folienwänden 24, 25 ein Wert ergibt, der dem zwischen den beiden Berührungsflächen vorgesehenen Spaltdicke entspricht.

Insbesondere das Dekorteil 1, aber auch das Absorberteil 2 wird zum Erhalten sauberer Umrandungen mit Vorteil ein Umbug 10 vorgesehen, der beispielsweise dadurch hergestellt wird, daß Außenränder in bekannter Weise nach innen umgeschlagen werden. Bei einem Aufbau des Erfindungsgemäßen Verkleidungsteils so wie in den Figuren 1, 2 und 4 dargestellt hat sich das als vermeidbar erwiesen. Hier genügt es zu Erhalten eines sauberen Randes, wenn der Umbug 10, wie in Fig. 5 illustriert, bündig mit den herumgezogenen Rändern der Stützschicht 4 gekappt wird.

### BEZUGSZEICHENAUFSTELLUNG

- 1: Dekorteil
- 2: Absorberteil
- 3: Zwischenschicht
- 4: Unterschicht, Stützschicht
- 5: Dekorschicht
- 6: Grenzschicht
- 7: Absorberschicht
- 8: Rippe
- 9: Luftkammer
- 10: Umbug
- 11: Verbindungsstelle
- 12: Berührungsfläche
- 13: Berührungsfläche
- 14: Formendeckel
- 15: Formenboden
- 16: Einfüllöffnung
- 17: Spritzwerkzeug
- 18: Verteilerkanal
- 19: Durchlaßöffnung
- 20: Spalt
- 21: Verankerung
- 22: Paßstift
- 23: Spritzdüsen
- 24: Folienschlauchabschnitt
- 25: Folienschlauchabschnitt

## Patentansprüche

1. Verfahren zur Herstellung eines Verkleidungsteils für die Innenverkleidung von Fahrzeugen, das an die Form der zu verkleidenden Oberfläche zur Verbindung mit dieser angepaßt ist und das eine Dekoroberfläche als Sichtseite aufweist,
mit den kennzeichnenden Verfahrensschritten:
in eine aus einer beweglich aufgespannten Formenhälfte (Formendeckel 14) und einer fest aufgespannten Formenhälfte (Formenboden 15) bestehende Form einer Spritzgießanlage wird ein vorgefertigtes Dekorteil (1) in den Formendeckel (14)
und ein vorgefertigtes Absorberteil (2) in den Formenboden 15) derart eingelegt,
daß nach dem Schließen der Form (14, 15) zwischen Dekorteil (1) und Absorberteil (2) ein vorzugsweise im wesentlichen durchgehender Spalt (20) bleibt;
Deckel (14) und Boden (15) der Form werden, vorzugsweise getrennt, aufgeheizt;
die Form (14, 15) wird geschlossen und die den Spalt (20) begrenzenden Berührungsflächen (12, 13) durch Herstellen einer den Spalt (20) ausfüllenden Zwischenschicht (3) miteinander verbunden;
das Verkleidungsteil (1-3) wird nach Abkühlung der Zwischenschicht ausgeformt.

2. Verfahren nach Anspruch 1,
dadurch gekennzeichnet, daß
nach dem Schließen der Form (14, 15) der Spalt (20) zwischen Dekorteil (1) und Absorberteil (2) durch Einspritzen eines akustisch wirksamen, sich in der Wärme mit den Berührungsflächen (12, 13) des Dekorteils (1) und des Absorberteils (2) verbindenden thermoplastischen Kunststoffes aufgefüllt wird.

3. Verfahren nach Anspruch 2,
dadurch gekennzeichnet, daß
in das Absorberteil (2) vor dem Einlegen in den Formenboden (15) Durchlaßöffnungen (19) für die Spritzmasse vorgesehen werden, deren Lage vorzugsweise mit der Lage der Spritzdüsen (23) im Formenboden (15) übereinstimmt.

4. Verfahren nach Anspruch 1,
dadurch gekennzeichnet, daß
vor dem Schließen der Form (14, 15) zwischen das Dekorteil (1) und das Absorberteil (2), welches auf seiner Innenseite mit Rippen (8) versehen wurde, die der Spaltdicke etwa entsprechen, ein unter vorzugsweise schwachem Luftdruck stehender, an den Enden verschlossener Folienschlauchabschnitt (24, 25) so eingelegt wird, daß sich die Folienschlauchoberfläche - vorzugsweise durch Wirkung des Innendruckes im Folienschlauchabschnitt (24, 25) und bevorzugt von Wärme - an die Innenseiten (12, 13) des Dekorteils (1) und des Absorberteils (2) anlegt und beim Schließen der Form (14, 15) mit den Innenseiten (12, 13) verbindet.

5. Verfahren nach Anspruch 4,
dadurch gekennzeichnet, daß
die Rippen (8) des Absorberteils (1) eine Höhe erhalten, die der um die zweifache, vorzugsweise der um die einfache bis anderthalbfache Foliendicke verringerten Spaltdicke entspricht.

6. Verfahren nach einem der Ansprüche 1 bis 5,
dadurch gekennzeichnet, daß
ein an dem Umfang des Dekorteils (1) vorgesehener Umbug (10) vor Einlegen des Dekorteils (1) in die Form (14, 15) umgelegt, dabei vorzugsweise fixiert und bei der Herstellung der Zwischenschicht (3) durch diese (3) festgelegt wird.

7. Verfahren nach einem der Ansprüche 1 bis 5,
dadurch gekennzeichnet, daß
ein an dem Umfang des Dekorteils (1) vorgesehener Umbug (10) vor Einlegen des Dekorteils (1) in die Form (14, 15) bündig mit den herumgezogenen Rändern der Stützschicht (4) gekappt wird. (siehe Figur 5)

8. Verkleidungsteil für die Innenverkleidung von Fahrzeugen, welches an die Form der zu verkleidenden Oberfläche angepaßt ist und eine Dekoroberfläche aufweist, hergestellt nach dem Verfahren nach einem oder mehrerer der Ansprüche 1 bis 7,
gekennzeichnet durch
ein zum Fahrzeuginneren weisendes, vorzugsweise in sich formstabiles Dekorteil (1),
ein der abzudeckenden Fahrzeugwand zugekehrtes Absorberteil (2) sowie eine
in einer geschlossenen Form zwischen Dekorteil (1) und Absorberteil (2) eingebrachte, vorzugsweise eingespritzte oder eingelegte, beide Teile (1, 2) verbindende Zwischenschicht (3).

9. Verkleidungsteil nach Anspruch 8,
dadurch gekennzeichnet, daß
das Dekorteil (1) aus einer vorzugsweise mit einer Unter- oder Stützschicht (4) hinterlegten Dekorschicht (5) besteht.

10. Verkleidungsteil nach Anspruch 9,
dadurch gekennzeichnet, daß
die Dekorschicht (5) aus thermisch verformbarem Material besteht oder mit einer thermisch verformbaren Beschichtung oder Abdeckung, insbesondere Unter- oder Stützschicht (4), hinterlegt ist.

11. Verkleidungsteil nach Anspruch 9 oder 10,
dadurch gekennzeichnet, daß
die Dekorschicht (5) aus einem Nadelvlies, einer Velours-Teppichware oder einer Webware besteht.

12. Verkleidungsteil nach Anspruch 11,
dadurch gekennzeichnet, daß
die aus einem Nadelvlies, einer Velours-Teppichware oder einer Webware bestehende Dekorschicht (5) in dem in der Wärme verformten Zustand ohne Stützschicht (4) formstabil ist.

13. Verkleidungsteil nach einem der Ansprüche 8 bis 12,
dadurch gekennzeichnet, daß
das Dekorteil (1) aus zwei oder mehr ohne Zwischenraum aneinanderstoßenden, einzeln vorgefertigten Abschnitten zusammengesetzt ist,
daß die einzelnen Abschnitte jeweils eigene, von denen der anderen Abschnitte abweichende Dekorschichten (5) aufweisen und/oder aus unterschiedlichem Material bestehen und
daß die das Dekorteil (1) bildenden Abschnitte durch die Zwischenschicht (3) in ihrer Lage zueinander festgelegt sind.

14. Verkleidungsteil nach einem der Ansprüche 8 bis 12,
dadurch gekennzeichnet, daß
das Dekorteil (1) aus zwei oder mehr ohne Zwischenraum aneinanderstoßenden, einzeln vorgefertigten Abschnitten zusammengesetzt ist,
daß die einzelnen Abschnitte jeweils eigene, von denen der anderen Abschnitte abweichende Dekorschichten (5) aufweisen und/oder aus unterschiedlichem Material bestehen und
daß die das Dekorteil (1) bildenden Abschnitte vor dem Einlegen in die Form entlang ihren Berührungskanten miteinander, vorzugsweise durch Verschweißen, verbunden sind.

15. Verkleidungsteil nach einem der Ansprüche 8 bis 14,
dadurch gekennzeichnet, daß
das Absorberteil (2) aus einem offenporigen bzw. luftdurchlässigen akustisch wirksamen, vorzugsweise thermisch unter Beibehaltung der Luftdurchlässigkeit bzw. Offenporigkeit verformbaren Material besteht.

16. Verkleidungsteil nach Anspruch 15,
dadurch gekennzeichnet, daß
die zur Zwischenschicht (3) weisende Grenzschicht (6) des Absorberteils (2) mindestens in Teilbereichen verfestigt ist.
